Europäisches Patentamt

European Patent Office

Office européen des brevets

(11) Veröffentlichungsnummer : **0 357 924 B1**

(12) **EUROPÄISCHE PATENTSCHRIFT**

(45) Veröffentlichungstag der Patentschrift :
03.06.92 Patentblatt 92/23

(21) Anmeldenummer : 89113511.3

(22) Anmeldetag : 22.07.89

(51) Int. Cl.⁵ : **B01D 53/34,** C09K 7/00, C10K 1/20

(54) **Verfahren zur Entfernung von Schwefelwasserstoff mit speziellen Eisenoxiden.**

(30) Priorität : **03.08.88 DE 3826373**

(43) Veröffentlichungstag der Anmeldung :
**14.03.90 Patentblatt 90/11**

(45) Bekanntmachung des Hinweises auf die
Patenterteilung :
**03.06.92 Patentblatt 92/23**

(84) Benannte Vertragsstaaten :
**DE FR GB IT NL**

(56) Entgegenhaltungen :
**DE-A- 2 304 897**

(56) Entgegenhaltungen :
**GB-A- 2 170 188
US-A- 4 008 775
WORLD OIL, Band 179, Nr. 1, Juli 1974, Seiten
173-179, Gulf Publishing Co., Houston, Texas,
US; "New mud additive willneutralize H2S"
G.R. GRAY et al.: "Composition and properties of oil well drilling fluids", 4. Ausgabe,
1981, Seiten 460-464,590, GulfPublishing Co.,
Houston, US**

(73) Patentinhaber : **BAYER AG
W-5090 Leverkusen 1 Bayerwerk (DE)**

(72) Erfinder : **Reichert, Günther, Dr.
Dünnwalder Mauspfad 358
W-5000 Köln 80 (DE)**

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

## Beschreibung

Die vorliegende Erfindung betrifft die Entfernung von Schwefelwasserstoff mit porösen Eisenoxiden.

Schwefelwasserstoff ist wegen seiner Toxizität, seiner korrosiven Eigenschaften und seines unangenehmen Geruchs häufig unerwünscht. So beträgt die an Arbeitsplätzen zulässige Höchstmenge nur 10 ppm (= MAK-Wert). Im Bereich von Bohrungen, mit denen Erdöl und/oder Erdgas in ihren Lagerstätten erkundet und daraus gewonnen werden sollen ist Schwefelwasserstoff nicht nur wegen seiner Toxizität unerwünscht, sondern auch weil er Schäden an der Bohrausrüstung verursacht und dadurch die Unterbrechungen der Bohroperationen und den Austausch von Teilen der Bohrausrüstung notwendig macht. Schließlich schreibt die Spezifikation für viele technische Produkte vor, daß diese nur sehr geringe Mengen Schwefelwasserstoff enthalten dürfen. Beispiele hierfür sind technische Gase, sowie Brenn- und Kraftstoffe. Wenn solche technische Produkte aus fossilen Rohstoffen hergestellt werden ist es deshalb häufig erforderlich, daraus Schwefelwasserstoff zu entfernen.

Es ist bereits bekannt Schwefelwasserstoff zu entfernen, indem man ihn mit porösen Eisenoxiden reagieren läßt. So beschreibt die DE-OS 24 31 226 (= US-A-4 008 775) Eisenoxidprodukte der idealen Zusammensetzung $Fe_3O_4$ mit Oberflächen, die mehr als 10 mal so groß sind, wie die Oberfläche von Magnetit und ein Verfahren zur Entfernung von Schwefelwasserstoff aus Bohrschlamm mit solchen Eisenoxidprodukten. Die US-A-4 476 027 beschreibt die Verwendung solcher Eisenoxidprodukte zur Entfernung von Schwefelwasserstoff aus Schwefelwasserstoff enthaltenden Flüssigkeiten. Nachteilig bei diesem Verfahren ist, daß, um eine bestimmte Menge Schwefelwasserstoff zu entfernen, entweder relativ große Mengen an Eisenoxid benötigt werden oder relativ lange Kontaktzeiten notwendig sind, insbesondere in dem in Bohrspülungen üblicherweise vorliegenden alkalischen Milieu.

Es wurde nun ein Verfahren zur Entfernung von Schwefelwasserstoff mit porösem Eisenoxid gefunden, das zu mindestens 80 Gew.-% aus $Fe_3O_4$ besteht, das dadurch gekennzeichnet ist, daß mindestens 10 % seines Porenvolumens als Poren mit Durchmessern im Bereich von 2000 bis 6000 Å vorliegen.

Das erfindungsgemäße Verfahren eignet sich zur Entfernung von Schwefelwasserstoff aus den verschiedensten Medien. Aus Gasen und Flüssigkeiten, z.B. Wasserstoff, Methan, flüssigen Kohlenwasserstoffen, Wasser und wäßrigen Lösungen kann man mit Hilfe des erfindungsgemäßen Verfahrens Schwefelwasserstoff beispielsweise dadurch entfernen, daß man die Gase oder Flüssigkeiten durch eine Schicht des erfindungsgemäß zu verwendenden Eisenoxids leitet, das dann vorzugsweise in Form von Teilchen mit Durchmessern im Bereich von 0,1 bis 10 mm vorliegt. Gegebenenfalls kann man solche Teilchen durch Vorpressen von feinerem Material erhalten.

Mit besonderem Vorteil kann man mit Hilfe des erfindungsgemäßen Verfahrens Schwefelwasserstoff aus dem Bereich von Bohrungen entfernen, insbesondere aus dem Bereich von Bohrungen zur Erkundung und Gewinnung von Erdöl und/oder Erdgas aus ihren Lagerstätten. In diesem Fall setzt man normalerweise das erfindungsgemäß zu verwendende Eisenoxid der Bohrspülung zu, beispielsweise in Form von Teilchen mit Durchmessern im Bereich von 0,1 bis 40 μm und im Mengen von 1 bis 20 %, bezogen auf das Volumen der gesamten Bohrspülung. Die Zusammensetzung der Bohrspülung ist dabei nicht kritisch. Das erfindungsgemäße Verfahren kann in Kombination mit allen üblichen Bohrspülungen angewendet werden, beispielsweise mit alkalisch eingestellten wäßrigen Bohrspülungen, die Aluminiumschichtsilikate (z.B. Bentonit), gegebenenfalls fluid loss agents (z.B. Antisol® FL 30), gegebenenfalls Elektrolyte (z.B. Natrium- und/oder Calciumchlorid) und gegebenenfalls Verdünner (z.B. Chromlignosulfonat) enthalten.

Poröse Eisenoxide in Rahmen der vorliegenden Erfindung sind beispielsweise solche mit einer Porosität von 55 bis 80 %. Vorzugsweise liegt die Porosität im Bereich von 60 bis 70 %.

Das erfindungsgemäß einzusetzende Eisenoxid besteht zu mindestens 80 Gew.-% aus $Fe_3O_4$. Vorzugsweise besteht es zu mindestens 92 Gew.-%, besonders bevorzugt zu 95 bis 100 Gew.-% aus $Fe_3O_4$. Neben $Fe_3O_4$ können gegebenenfalls andere Eisenoxide, z.B. $Fe_2O_3$, und/oder andere Stoffe vorhanden sein, z.B. Silicium, Aluminium, Kohlenstoff, Natrium, Eisen, Chrom, Mangan und/oder Nickel in elementarer Form oder in Form von Verbindungen. Insbesondere seien genannt: Silikate, Siliciumdioxid, Eisensulfid, Aluminiumoxid und Kohlenstoff.

Es ist ein wesentliches Merkmale der vorliegenden Erfindung, daß bei dem Eisenoxid mindestens 10 % seines Porenvolumens als Poren mit Durchmessern im Bereich 2000 bis 6000 Å vorliegen. Vorzugsweise liegen 10 bis 100 % des Porenvolumens des Eisenoxids als Poren mit Durchmessern im Bereich 2000 bis 6000 Å, besonders bevorzugt 15 bis 80 % des Porenvolumens. Innerhalb der Porendurchmesser von 2000 bis 6000 Å sind solche von 2300 bis 5000 Å bevorzugt, ganz besonders solche von 3000 bis 4700 Å. Ganz besonders bevorzugt sind Eisenoxide, bei denen 20 bis 75 % des Porenvolumens als Poren mit Durchmessern von 2300 bis 5000 Å vorliegen.

In einer besonderen Ausführungsform der vorliegenden Erfindung gelangen Eisenoxide zum Einsatz, bei

EP 0 357 924 B1

denen zusätzlich die nach der BET-Methode bestimmt spezifische Porenoberfläche sich zu der nach der Quecksilbermethode bestimmten spezifischen Porenoberfläche wie 1:1 bis 2:1 verhält. Vorzugsweise beträgt dieses Verhältnis 1,5:1 bis 1,9:1. Details zu der BET- und Quecksilbermethode können Chimia 35 (10), 408-419 (1981) entnommen werden.

Die Korngröße der Eisenoxide kann beispielsweise im Bereich von 0,1 µm bis 10 mm liegen. Bei dessen Anwendung in Bohrspülungen liegt vorzugsweise über 90 Gew.-% des Eisenoxids in Korngrößen zwischen 0,2 und 20 µm vor.

Die Korngrößenverteilung der Eisenoxide kann mono- und multimodal sein. Vorzugsweise ist sie monomodal.

Das erfindungsgemäße Verfahren ergibt eine überraschend gute und schnelle Aufnahme des Schwefelwasserstoffs durch das Eisenoxid. Im Vergleich zu üblicherweise für derartige Zwecke verwendetem Eisenoxid kann man deshalb eine gegebene Menge Schwefelwasserstoff in kürzerer Zeit und/oder mit einer geringeren Menge Eisenoxid entfernen. Ein weiterer Vorteil des erfindungsgemäßen Verfahrens ist eine höhere Staubfreiheit gegenüber dem Stand der Technik.

Die vorliegende Erfindung betrifft auch eine Bohrspülung, die dadurch gekennzeichnet ist, daß die 1 bis 20 Gew.-% der zuvor beschriebenen Eisenoxide enthält, bezogen auf das Volumen der gesamten Bohrspülung.

Beispiele

Die folgenden Beispiele wurden in Labor durchgeführt und simulieren möglichst wirklichkeitsnah die Verhältnisse in einem Bohrloch zur Gewinnung von Erdöl und/oder Erdgas aus einer Lagerstätte.

Beispiel 1

Unter kräftigem Rühren mit einem Propellerrührer wurden 420 g quellfähiger Natrium-Montmorillonit in 4830 ml Leitungswasser langsam portionsweise eingetragen. Der quellfähige Natrium-montmorillonit war durch eine Behandlung von Bentonit auf Kalzium-Montmorillonit-Basis mit Sodalösung erhalten worden. Es wurde 5 Stunden bis zum Erhalt einer klumpenfreien Aufschlämmung nachgerührt und dann das geschlossene Gefäß 30 Stunden bei Raumtemperatur stehen gelassen. Danach wurde erneut kräftig aufgerührt und portionsweise zunächst 60 g Chromlignosulfonat und dann eine Lösung von 3,42 g Natriumhydroxid in 750 ml Wasser zugesetzt. So wurde eine Muster-Bohrspülung mit einem pH-Wert von 9 erhalten.

Diese wurde in einen 12 l-Autoklaven überführt und dann 341,1 g eines Eisenoxids mit den folgenden Merkmalen zugesetzt:
Gehalt an $Fe_3O_4$: 95 Gew.-%
Porosität: 67 %
Porenverteilung: 60 % des Porenvolumens in Form von Poren mit Durchmessern im Bereich 2000 bis 5000 Å
spez. Porenoberfläche nach der Hg-Methode: 6,4 m²/g spez. Porenoberfläche nach BET-Methode: 10,8 m²/g
Korngrößenverteilung: 1 bis 40 µm (96 % zwischen 1 und 8 µm).

Danach wurde bei geschlossenem Autoklaven weitergerührt. Zunächst wurde ohne Druck 30 Minuten gerührt, dann wurden 175 ml (= 138,8 g) Schwefelwasserstoff aus einer Pumpe zudosiert und mit Stickstoff ein Druck von 30 bar eingestellt. Danach wurde sofort und jeweils nach 10, 30, 60 und 120 Minuten eine Probe entnommen und darin der Sulfidgehalt nach Garett bestimmt. Zur Probennahme wurden jeweils 150 ml von der im Autoklaven befindlichen Mischung in einen zweiten Autoklaven übergedrückt, in dem 180 g 20-%ige Natronlauge vorgelegt waren. Nach Entspannung wurde die Probe zentrifugiert und der klare Überstand noch einmal über ein Faltenfilter filtriert. Die Bestimmung des Sulfidgehaltes erfolgte in dem aus dem Faltenfilter abgelaufenen Filtrat.

Die Ergebnisse sind in Tabelle 1 zusammengefaßt.

Beispiel 2 (zum Vergleich)

Es wurde verfahren wie in Beispeil 1, jedoch wurde gemäß dem Stand der Technik ein Eisenoxid eingesetzt, das folgende Merkmale aufwies:
Gehalt an $Fe_3O_4$: 95 Gew.-%
Porosität: 54 %
Porenverteilung: 8 % des Porenvolumens in Form von Poren mit Durchmessern im Bereich 2000 bis 5000 Å
spez. Porenoberfläche nach der Hg-Methode: 5,4 m²/g spez. Porenoberfläche nach BET-Methode: 6,8 m²/g
Korngrößenverteilung: 0,1 bis 190 µm (90 % zwischen 0,1 und 80 µm).

Die Ergebnisse sind in Tabelle 1 zusammengestellt.

Beispiel 3

Es wurde verfahren wie in Beispiel 1, jedoch wurde anstelle des mit Soda aktivierten Bentonits ein Wyoming-Bentonit eingesetzt. Bei diesem Produkt handelte es sich um einen originären Natrium-Montmorillonit. Außerdem wurde so viel Natronlauge zu der Muster-Bohrspülung gegeben, bis ein pH-Wert von 11 erreicht war. Die Ergebnisse sind in Tabelle 1 zusammengestellt.

Beispiel 4 (zum Vergleich)

Es wurde verfahren wie in Beispiel 3, jedoch wurde das gleiche Eisenoxid die in Beispiel 2 eingesetzt. Die Ergebnisse sind in Tabelle 1 zusammengefaßt.

## Tabelle 1

| Beispiel | Gehalt an $S^{2-}$ in ppm nach | | | | |
|---|---|---|---|---|---|
| | 0 | 10 | 30 | 60 | 120 Minuten |
| 1 | 11800 | 5400 | 103 | 97 | 188 |
| 2 (z.V.) | 10300 | 7200 | 9100 | 4200 | 2500 |
| 3 | 10500 | 2500 | 110 | 115 | 115 |
| 4 (z.V.) | 13900 | 11200 | 10400 | 7200 | 2400 |

Es ist zu ersehen, daß das Eisenoxid mit den erfindungsgemäßen Charakteristiken die Produkte des Standes der Technik um mindestens den Faktor 10 übertrifft.

**Patentansprüche**

1. Verfahren zur Entfernung von Schwefelwasserstoff mit porösem Eisenoxid das zu mindestens 80 Gew.-% aus $Fe_3O_4$ besteht, dadurch gekennzeichnet, daß mindestens 10 % seines Porenvolumens als Poren mit Durchmessern im Bereich von 2000 bis 6000 Å vorliegen.

2. Verfahren nach Anspruch 1, dadurch gekennzeichnet, daß das Eisenoxid eine Porosität von 55 bis 80 % aufweist.

3. Verfahren nach Ansprüchen 1 und 2, dadurch gekennzeichnet, daß das Eisenoxid zu mindestens 92 Gew.-% aus $Fe_3O_4$ besteht.

4. Verfahren nach Ansprüchen 1 bis 3, dadurch gekennzeichnet, daß 10 bis 100 % des Porenvolumens des Eisenoxids als Poren mit Durchmessern im Bereich von 2000 bis 6000 Å vorliegen.

5. Verfahren nach Ansprüchen 1 bis 4, dadurch gekennzeichnet, daß bei dem Eisenoxid die nach der BET-Methode bestimmte spezifische Porenoberfläche sich zu der nach der Quecksilbermethode bestimmten spezifischen Porenoberfläche wie 1:1 bis 2:1 verhält.

6. Verfahren nach Ansprüchen 1 bis 5, dadurch gekennzeichnet, daß das Eisenoxid in einer Korngröße von 0,1 μm bis 10 mm vorliegt.

7. Bohrspülung, die 1 bis 20 %, bezogen auf das Volumen der gesamten Bohrspülung, poröses Eisenoxid enthält, das zu mindestens 80 Gew.-% aus $Fe_3O_4$ besteht und bei dem mindestens 10 % seines Porenvolumens als Poren mit Durchmessern im Bereich von 2000 bis 6000 Å vorliegt.

**Claims**

1. Process for removal of hydrogen sulphide using porous iron oxide which consists to the extent of at least 80 % by weight of $Fe_3O_4$, characterised in that at least 10 % of its pore volume is in the form of pores having diameters in the range from 2000 to 6000 Å.

2. Process according to Claim 1, characterised in that the iron oxide has a porosity of 55 to 80 %.

3. Process according to Claims 1 and 2, characterised in that the iron oxide consists to the extent of at least 92 % by weight of $Fe_3O_4$.

4. Process according to Claims 1 to 3, characterised in that 10 to 100 % of the pore volume of the iron oxide is in the form of pores having diameters in the range from 2000 to 6000 Å.

5. Process according to Claims 1 to 4, characterised in that, in the iron oxide, the ratio of the specific pore surface area determined by the BET method to the specific pore surface area determined by the mercury method is 1:1 to 2:1.

6. Process according to Claims 1 to 5, characterised in that the iron oxide is present in a particle size of 0.1

7. Drilling mud which contains 1 to 20 %, based on the volume of the total drilling mud, of porous iron oxide which consists to the extent of at least 80 % by weight of $Fe_3O_4$, and in which at least 10 % of its pore volume is in the form of pores having diameters in the range from 2000 to 6000 Å.


**Revendications**

1. Procédé pour éliminer le sulfure d'hydrogène avec un oxyde de fer poreux qui est constitué de $Fe_3O_4$ en proportion d'au moins 80 % en poids, caractérisé en ce qu'au moins 10 % du volume de ses pores sont présents sous forme de pores ayant des diamètres compris dans la plage de 2000 à 6000 Å.

2. Procédé suivant la revendication 1, caractérisé en ce que l'oxyde de fer présente une porosité de 55 à 80 %.

3. Procédé suivant les revendications 1 et 2, caractérisé en ce que l'oxyde de fer est constitué de $Fe_3O_4$ en proportion d'au moins 92 % en poids.

4. Procédé suivant les revendications 1 à 3, caractérisé en ce que 10 à 100 % du volume des pores de l'oxyde de fer sont présents sous forme de pores ayant des diamètres dans la plage de 2000 à 6000 Å.

5. Procédé suivant les revendications 1 à 4, caractérisé en ce que dans l'oxyde de fer, la surface spécifique des pores détermines par la méthode BET est dans un rapport de 1:1 à 2:1 avec la surface spécifique des pores déterminée par la méthode au mercure.

6. Procédé suivant les revendications 1 à 5, caractérisé en ce que l'oxyde de fer est présent avec des grosseurs de grain de 0,1 $\mu$m à 10 mm.

7. Fluide de forage, qui contient 1 à 20 %, par rapport au volume du fluide total de forage, d'oxyde de fer poreux qui est constitué de $Fe_3O_4$ en proportion d'au moins 80 % en poids et dans lequel au moins 10 % en poids du volume des pores sont présents sous forme de pores ayant des diamètres dans la plage de 2000 à 6000 Å.